Europäisches Patentamt

European Patent Office

Office européen des brevets

(19)

(11) Veröffentlichungsnummer: **0 166 446**
A2

## (12) EUROPÄISCHE PATENTANMELDUNG

(21) Anmeldenummer: **85107991.3**

(22) Anmeldetag: **27.06.85**

(51) Int. Cl.⁴: **A 23 G 3/00**, A 23 G 3/20

(30) Priorität: **27.06.84 DE 3423727**

(43) Veröffentlichungstag der Anmeldung: **02.01.86**
**Patentblatt 86/1**

(84) Benannte Vertragsstaaten: **AT BE CH DE FR GB IT LI LU NL SE**

(71) Anmelder: **Mirabell Salzburger Confiserie- und Bisquit GmbH, A-5082 Grödig Salzburg (AT)**

(72) Erfinder: **Stadler, Edwin, Dipl.-Ing. Dr., A-5081 Anif 301 (AT)**

(74) Vertreter: **Mitscherlich, Hans, Dipl.-Ing. et al, Patentanwälte Dipl.-Ing. H. Mitscherlich Dipl.-Ing. K. Gunschmann Dipl.-Ing. Dr.rer.nat. W. Körber Dipl.-Ing. J. Schmidt-Evers Dipl.-Ing. W. Melzer Steinsdorfstrasse 10, D-8000 München 22 (DE)**

(54) **Praline mit flüssiger Füllung.**

(57) Die Erfindung bezieht sich auf eine Praline mit weicher oder flüssiger Füllung und verfolgt den Zweck, die Haltbarkeit der Praline zu verlängern. Dies wird dadurch erreicht, dass die Praline aus einer inneren, die Füllung (1) enthaltenden Hülse (2) - der Innenhülse - und einer diese umschliessenden äusseren Hülse (3) - der Aussenhülse - besteht. Besonders vorteilhaft ist es, zwischen der Innenhülse (2) und der Aussenhülse (3) noch eine verdampfungshemmende Schicht (4) anzuordnen.

EP 0 166 446 A2

Praline mit flüssiger Füllung

Die Erfindung bezieht sich auf eine Praline mit flüssiger Füllung.

Bei bekannten Pralinen der vorbezeichneten Art ist die Haltbarkeit stark beschränkt, weil die für eine geschacklich akzeptable Produktqualität erforderlichen Hülsenmassen der Praline wasser- und/oder alkoholdampfdurchlässig sind. Die Verdampfung nimmt bei erhöhten Lagertemperaturen zu, so daß Pralinen der bekannten Art in der warmen Jahreszeit bzw. entsprechendem Klima nicht in Verkehr gebracht werden.

Dieser Nachteil kann teilweise durch die bekannte Zuckerkrustentechnologie überwunden werden, jedoch wird das Vorhandensein einer Zuckerkruste in Pralinen von vielen Konsumenten aus geschmacklichen Gründen abgelehnt. Außerdem erfordert die optimale Anwendung der Zuckerkrustentechnologie eine große Erfahrung und einen großen Herstellungs- sowie Zeitaufwand. Darüberhinaus ist die Zuckerkrustentechnologie auf bestimmte Füllungen wie z.B. fruchthaltige Füllungen nicht oder nur beschränkt anwendbar.

Der Erfindung liegt die Aufgabe zugrunde, die Haltbarkeit einer Praline der eingangs bezeichneten Art zu verlängern.

Diese Aufgabe wird durch die in den Ansprüchen enthaltenen Merkmale gelöst.

Die erfindungsgemäße Ausgestaltung führt zu mehreren wesentlichen Vorteilen. Ein wesentlicher Vorteil besteht darin, daß die erfindungsgemäße Innenhülse eine Verdampfungsbarriere darstellt, die nicht nur die Verdampfung von Wasser und/oder Alkohol, sondern auch von Geschmacks- und Aromastoffen bedeutend einschränkt. Die innere Hülse ist deshalb geeignet diese Funktion zu erfüllen, weil sie als selbständiger, mehr oder weniger tragender Körper mit einer entsprechend großen Wandstärke hergestellt werden kann, wodurch das Maß der Verdampfung wesentlich herabgesetzt wird. Dabei können in weiterer Ausgestaltung der Erfindung unter Berücksichtigung gewünschter Geschmacksrichtungen solche Stoffe zur Herstellung der Innenhülse verwendet werden, die die dampfsperrende Wirkung begünstigen. Es ist somit gleichzeitig möglich, den Geschmack der Praline durch eine gewünschte Aromatisierung des für die innere Hülse verwendeten Materials oder durch die Verwendung besonderer Stoffe zu kreieren oder zu verstärken.

Ein weiterer wesentlicher Vorteil der erfindungsgemäßen Ausgestaltung besteht darin, daß die Herstellung der Praline wesentlich besser gestaltet werden kann. Dieser Vorteil bezieht sich nicht nur darauf, daß die innere Hülse separat als Formteil vorgefertigt werden kann, sondern auch darauf, daß mehrere Herstellungsschritte nicht hintereinander erfolgen müssen, sonder parallel ablaufen können, nämlich das Herstellen der inneren Hülse und das Eingeben der Füllung, wodurch der Herstellungsprzeß ganz bedeutend vereinfacht und beschleunigt werden kann.

0166446

Die durch die Erfindung erzielbaren Vorteile sind schon durch eine innere Hülse mit einer offenen Seite erreichbar. Dies ist dadurch begründet, daß der größte Teil der die Füllung umgebenden Wandung von der erfindungsgemäßen Verdampfungsbarriere umgeben ist und deshalb die haltbarkeit wesentlich verlängert werden kann.

In bevorzugter Ausgestaltung ist die innere Hülse ein allseitig geschlossener, vorgefertigter Körper, in dem die Füllung eingeschlossen ist. Hierdurch wird nicht nur auch die Bodenseite mit einer erfindungsgemäßen Verdampfungsbarriere versehen, sondern diese Ausgestaltung ist auch verfahrenstechnisch vorteilhaft. Da nämlich die innere, die Füllung enthaltende Hülse allseitig geschlossen ist, kann die Vorfertigung der inneren Hülse im größeren Umfang erfolgen, weil in der Zeit zwischen der Vorfertigung und dem Einsetzen der inneren Hülse in die äußere Hülse die Verflüchtigung von Füllungsstoffen bzw. Geschmacks- und Aromastoffen erheblich eingeschränkt ist. Darüberhinaus wird durch diese Ausgestaltung die Handhabung der inneren Hülse erheblich vereinfacht, weil insbesondere bei einer flüssigen Füllung die Gefahr des Auslaufens nicht besteht. D.h., es braucht für eine geringere Sorgfalt beim Handhaben, insbesondere beim Einsetzen der inneren Hülse gesorgt zu werden. Bei dieser Ausgestaltung stellt die innere Hülse mit der darin enthaltenen Füllung sozusagen eine Innenpraline dar, die in eine Außenpraline eingesetzt wird.

Zur weiteren Verbesserung der Wirksamkeit der Verdampfungsbarriere ist es vorteilhaft, zwischen der Innenhülse und der Außenhülse eine verdampfungshemmende Schicht anzuordnen, die auf der Innenfläche der Außen- hülse und/oder auf der Außenfläche der Innenhülse angeordnet werden kann. In bevorzugter Ausgestaltung ist diese verdampfungshemmende Schicht eine nachgiebige Verbindungsmasse. Diese Ausgestaltung ermöglicht die Einbettung der Innenhülse in die Außenhülse, wodurch erstere fest in der Außenhülse aufgenommen ist. Ein Schlackern der Innenhülse ist somit ausgeschlossen. Außerdem erhält die Praline eine bedeutend höhere Festigkeit, die ihre Handhabung insbesondere im Fertigungsprozeß erleichtert. Eine Erhöhung der Festigkeit ist zwar schon dann gegeben, wenn die Innenhülse vorhanden ist, jedoch ist die etwa vollständige Abstützung der Außenhülse durch die Innenhülse erst dann gewährleistet, wenn die Innenhülse durch die Verbindungsmasse in der Außenhülse eingebettet ist.

Auf eine Verbindungsmasse kann in weiterer Ausgestaltung der Erfindung dann verzichtet werden, wenn die Innenhülse aus einer weichen bzw. plastischen Masse hergestellt ist, so daß sie sich beim Einsetzen unter ggf. nur leichtem Druck an die Innenfläche der Außenhülse anlegt. Andererseits wird hierdurch eine verhältnismäßig weiche Praline geschaffen, die von vielen Konsumenten bevorzugt wird. Dagegen ist eine feste bzw. harte Innenhülse aus herstellungstechnischen Gründen vorteilhaft.

Die Materialien für die Füllung, die Innenhülse, die verdampfungshemmende Schicht bzw. die Verbindungsmasse und die Außenhülse sind nach den Gesichtspunkten der gewünschten Geschmacksrichtung zu bestimmen, wobei auch - wie schon erwähnt - die verdampfungshemmende Eigenschaft der zu wählenden Materialien zu berücksichtigen ist. Für eine befriedigende Lösung sowohl in geschmacklicher Hinsicht als auch im Hinblick auf eine möglichst wirksame Verdampfungsbarriere können auch eine Mehrzahl Materialien in Kombination oder in mehreren Schichten Anwendung finden. Bei Versuchen hat es sich gezeigt, daß die Verwendung von Nougat oder Nougatsurrogaten für die Innenhülse und Marzipancreme für die Verbindungsmasse nicht nur in geschmacklicher Hinsicht, sondern auch im Hinblick auf eine befriedigende Verdampfungsbarriere und eine ausreichende Festigkeit bei angestrebter, zumindest innerer Weichheit der Praline vorteilhaft ist.

Die Erfindung umfaßt auch ein vorteilhaftes Verfahren zur Herstellung der Praline der eingangs bezeichneten Art. Der wesentliche Vorteil des erfindungsgemäßen Verfahrens besteht darin, daß im Vergleich zu bekannten Verfahren, zwei Herstellungsschritte parallel erfolgen können, nämlich das Herstellen der Innenhülse und das Einbringen der Füllung in die Innenhülse. Dieses Verfahren läßt sich insbesondere dann einfach durchführen, wenn eine die Füllung enthaltende Innenhülse verwendet wird, die allseitig geschlossen ist. Bei der Verwendung einer solchen Innenhülse bedarf es einer geringeren Sorgfalt bei der Handhabung zum Einsetzen der Innenhülse. Dies ist sowohl bei manuellem als auch maschinellem Einsetzen von Bedeutung. Da bei einer geschlossenen Innenhülse eine flüssige Füllung nicht auslaufen kann, ist es möglich, die Innenhülse mit größeren Geschwindigkeiten zu bewegen und in die Außenhülse einzusetzen. Das Verschließen der Außenhülse kann dann in an sich bekannter Weise erfolgen, z.B. durch vollständiges Ausfüllen mit einer bevorzugt der Außenhülse entsprechenden Masse und nachfolgendem Abstreichen.

Um bei der Verwendung einer offenen Innenhülse die Verdampfungsbarriere auch im Bereich des Pralinenbodens vorzusehen, ist es vorteilhaft, vor dem Verschließen

0166446

der Außenhülse die Innenhülse zu verschließen, und zwar bevorzugt mit dem gleichen Material, aus dem die Innenhülse besteht.

Zur weiteren Verbesserung der Verdampfungsbarriere ist es vorteilhaft, die Außenhülse auf ihrer Innenfläche oder die Innenhülse auf ihrer Außenfläche zunächst mit der nachgiebigen Verbindungsmasse auszukleiden, dann unter leichtem Preßdruck die die Füllung enthaltende Innenhülse in die Außenhülse einzusetzen und anschließend die Außenhülse zu verschließen.

Dabei empfiehlt es sich, bei der Verwendung einer offenen Innenhülse, vor dem Verschließen der Außenhülse auch auf die Füllung oder auch auf die freie Seite der Innenhülse die Verbindungsmasse aufzutragen, um die Auskleidung mit der Verbindungsmasse allseitig vorzusehen.

Nachfolgend wird ein Ausführungsbeispiel der Erfindung anhand einer vereinfachten Zeichnung näher beschrieben.

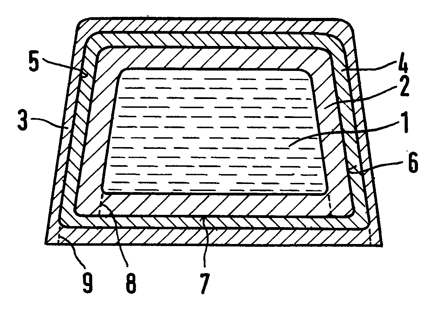

Die in der Zeichnung in lotrechtem Schnitt dargestellte Praline besteht aus einer Außenhülse 3, einer Innenhülse 2, einer in der Innenhülse 2 angeordneten Füllung 1 und einer Verbindungsmasse 4, die sich zwischen der Außenühlse 3 und der Innenhülse 2 befindet. Die Außenhülse 3 besteht aus dunkler Edelschokolade, die Innenhülse 2 aus einer Nougatmischung und die Verbindungsmasse 4 aus Marzipancreme. Für die Füllung 1 wird ein Likör verwendet.

Zur Herstellung der Praline werden vorgefertigte Hülsenkörper verwendet, die einseitig im Sinne einer Schale offen sind und von denen wenigstens der Innenquerschnitt der Außenhülse 3 zur offenen Seite hin divergiert. Vorteilhaft ist auch eine etwa entsprechende konische Formgebung der Außenform der Innenhülse 2.

In die mit ihrer offenen seite nach oben weisende Außenhülse 3 wird die Verbindungsmasse 4 eingegeben und auf die Innenfläche 5 der Außenhülse 3 verteilt. gleichzeitig dazu kann die Innenhülse 2 mit der Füllung 1 gefüllt und verschlossen werden. Der nächste Verfahrensschritt besteht darin, die Innenhülse 2 in passender Ausrichtung in die Außenhülse 3 einzusetzen, wobei je nach der Konsistenz der Verbindungsmasse 4 ein leichtes Andrücken vorteilhaft ist, um die Innenhülse 2 satt einzusetzen. Auf diese Weise erhält die Verbindungsmasse 4 einen möglichst großflächigen Kontakt sowohl mit der Innenseite 5 der Außenfläche 3 als auch mit der Außenfläce 6 der Innenhülse 2. Anschließend wird die in der Herstellungsposition nach oben weisende freie Seite 7 der Innenhülse 2 verschlossen, was durch Auftragen von bevorzugt dem gleichen Material, aus dem auch die Innenhülse 2 besteht, erfolgen kann, wie es vom Verschließen der Außenhülse 3 her an sich bekannt ist. Danach kann auch eine Schicht Verbindungsmasse auf die verschlossene Innenhülse 2 aufgetragen werden. Nun bedarf es nur noch des Verschließens der Außenhülse 3, was in an sich bekannter Weise durch Auffüllen und Abstreichen der hierzu verwendeten Masse erfolgen kann, die in bevorzugter Ausgestaltung aus dem gleichen Material besteht wie die Außenhülse 3, nämlich aus dunkler Edelschokolade. Die Verbindungsstellen zwischen den Hülsen 2, 3 und dem Verschließmaterial sind nach dem Verschließen miteinander verschmolzen und deshalb kaum erkennbar. Lediglich zur Erklärung sind diese Stellen in der Zeichnung andeutungsweise dargestellt und mit 8 bzw. 9 bezeichnet.

In einer vorteilhaften Ausgestaltung weist die Innenhülse 2 eine Festigkeit auf, die gerade ausreicht, die Füllung 1 aufzunehmen und bei ihrer Handhabung, d.h. beim Einsetzen, formsteif zu bleiben. Die Innenhülse 2 besteht somit aus einem Material, das mehr weich als fest bezeichnet werden kann, und dessen Formsteifheit lediglich die vorgenannten Belastungen aufnehmen soll.

Unter Berücksichtigung dieses Gesichtspunktes ist es vorteilhaft, die Praline im horizontalen Querschnitt etwa rund auszuführen, was durch die erforderliche Formsteifheit trotz weicher Grundfestigkeit der Innenhülse 2 begünstigt ist.

Eine bevorzugte Herstellungsart bzw. Verfahrensweise besteht darin, die Innenhülse 2 vor dem Einsetzen in die Außenhülse 3 mit dem selben Material aus dem auch die Innenhülse 2 besteht oder einem anderen Material zu verschließen, also komplett mit der Füllung als geschlossenen Körper vorzufertigen, so daß auch dieser Verfahrensschritt parallel erfolgen kann.

Grundsätzlich ist es vorteilhaft, bei der Verwendung einer Füllung 1 mit einem Wassergehalt von über 1 %, worunter weiche und flüssige Füllungen fallen, Materialien für die Innenhülse 2 und/oder die Verbindungsmasse 4 zu wählen, die ebenfalls einen Wassergehalt von über 1 % ihres Gewichtes aufweisen. Dabei ist es vorteilhaft, einen möglichst hohen Wassergehalt vorliegen zu haben. Der Wassergehalt stellt gewissermaßen ein Reservoir dar, der einem schnellen Austrocknen entgegenwirkt.

Die erfindungsgemäße Ausgestaltung eignet sich auf für Füllungen mit festen Bestandteilen wie Fruchtfüllungen, z.B. mit Fruchsaft oder Likör eingesetzte Früchte.

0166446

ANSPRÜCHE

1. Praline mit flüssiger Füllung,
dadurch gekennzeichnet,
daß sie aus einer inneren, die Füllung (1) enthaltenden
Hülse (2) und einer diese umschließenden äußeren Hülse
(3) besteht.

2. Praline nach Anspruch 1,
dadurch gekennzeichnet,
daß zwischen der Innenhülse (2) und der Außenhülse
(3) eine verdampfungshemmende Schicht (4) angeordnet
ist.

3. Praline nach Anspruch 1 oder 2,
dadurch gekennzeichnet,
daß die Innenhülse (2) aus einem festen bzw. harten
selbsttragenden Material besteht.

4. Praline nach Anspruch 1 oder 2,
dadurch gekennzeichnet,
daß die Innenhülse (2) aus einem weichen, plastischen,
jedoch noch selbsttragenden Material besteht.

5. Praline nach Anspruch 3,

dadurch gekennzeichnet,

daß die Innenhülse (2) aus fester bzw. harter Schokolade, insbesonderer dunkler Edelschokolade, festen bzw. harten Schokoladensurrogaten oder einer Mischung aus Nußpaste und härtenden Stoffen wie gehärtetem Fett besteht.

6. Praline nach Anspruch 4,

dadurch gekennzeichnet,

daß die Innenhülse (2) aus weicher Schokolade, weichen Schokoladensurrogaten, in Kakaobutter gebundene Nußpaste bzw. -raspeln wie Kokosraspeln, Nougat oder Nougatsurrogaten besteht.

7. Praline nach einem der Ansprüche 1 bis 6,

dadurch gekennzeichnet,

daß die Außenhülse (3) aus Schokolade, insbesondere dunkler Edelschokolade, Schokoladensurrogaten, einem Gemisch aus Nußpaste und bindenden bzw. härtenden Stoffen wie Fett, inbesondere in Kakaobutter gebundene Kokosraspeln, Nougat oder Nougatsurrogaten besteht.

8. Praline nach einem der Ansprüche 1 bis 7,

dadurch gekennzeichnet,

daß die Füllung (1) vorzugsweise aus Weinbrand, Likör, Fruchtsaft, Sirup oder aromatisiertem Sirup und gegebenenfalls einem Zusatz von festen Bestandteilen wie Nüssen, Rosinen und eventuell kandierten Früchten besteht.

9. Praline nach einem der Ansprüche 2 bis 8,

dadurch gekennzeichnet,

daß die verdampfungshemmende Schicht (4) aus Schokolade, insbesondere dunkler Edelschokolade, Schokoladensurrogaten, Nougat, Nougatsurrogaten, einem Gemisch aus Nüssen und Pflanzenfett und/oder Kakaobutter, Nußpaste, Marzipan bzw. -creme, Persipan bzw. -creme, Gelee bzw. geleeartigem Material, fruchthaltigem Material, Material auf Fondantbasis und/oder Krokantbasis oder protein- und/oder stärkereichem Material besteht.

10. Praline nach Anspruch 9,
dadurch gekennzeichnet,
daß die verdampfungshemmende Schicht (4) zusätzlich Geschmacks- und Aromastoffe enthält.

11. Praline nach Anspruch 10,
dadurch gekennzeichnet,
daß die Geschmacks- und Aromastoffe der verdampfungshemmenden Schicht (4) mit den Geschmacks- und Aromastoffen der Füllung (1) und/oder der Innenhülse (2) identisch sind.

12. Verfahren zur Herstellung einer Praline nach einem der Ansprüche 1 bis 11,
dadurch gekennzeichnet,
daß in den Hohlraum der auf einer Seite noch offenen Außenhülse (3) die die Füllung (1) enthaltende Innenhülse (2) eingesetzt und anschließend die Anordnung in an sich bekannter Weise verschlossen wird.

13. Verfahren nach Anspruch 12,
dadurch gekennzeichnet,
daß die Innenhülse (2) und die Außenhülse (3) in separaten Arbeitsgängen verschlossen werden, wobei zum Verschließen der Innenhülse (2) bevorzugt das gleiche Material, aus dem auch die Innenhülse (2) besteht, verwendet wird und zum Verschließen der Außenhülse (3) bevorzugt das gleiche Material, aus dem auch die Außenhülse (3) besteht, verwendet wird.

0166446

14. Verfahren nach Anspruch 12 oder 13,
dadurch gekennzeichnet,
daß die Außenhülse (3) auf ihrer Innenfläche (5) zunächst mit einer nachgiebigen Verbindungsmasse (4) ausgekleidet und dann die die Füllung (1) enthaltende Innenhülse (2) unter leichtem Preß- bzw. Andruck in die Außenhülse (3) eingesetzt und anschließend die Außenhülse (3) in an sich bekannter Weise verschlossen wird.

15. Verfahren nach Anspruch 12 oder 13,
dadurch gekennzeichnet,
daß die die Füllung (1) enthaltende, allseitig geschlossene Innenhülse (2) auf ihrer Außenfläche (6) zunächst mit einer nachgiebigen Verbindungsmasse (4) bedeckt und dann unter leichtem Preß- bzw. Andruck in den Hohlraum der Außenhülse (3) eingesetzt und anschließend die Außenhülse (3) in an sich bekannter Weise verschlossen wird.